# EUROPÄISCHE PATENTSCHRIFT

(11) **EP 1 359 038 B1**
(45) Veröffentlichungstag und Bekanntmachung des Hinweises auf die Patenterteilung: **17.12.2008**
(21) Anmeldenummer: 03007827.3
(22) Anmeldetag: 04.04.2003
(51) Int. Cl.: B60J 7/047, B60J 7/14, B60J 7/057

(54) **Öffnungsfähiges Fahrzeugdach**
Openable vehicle roof
Toit ouvrant de véhicule

(30) Priorität: 11.04.2002 DE 10215966
(43) Veröffentlichungstag der Anmeldung: 05.11.2003
(73) Patentinhaber: Webasto AG, 82131 Stockdorf (DE)
(72) Erfinder: De Gaillard, Francois, 85390 Mouilleron en Pareds (FR); De Waal, Martin, 1566 TS Assendelft (NL); Guicheteau, Jean-Luc, 49300 Cholet (FR); Kimoto, Izumi, Saeki-gun 739-0413 Hiroshima-ken (JP); Kölbl, Michael, 82061 Neuried (DE); Mitterbauer, Peter, 4810 Gmunden (AT); Pollak, Martin, 82178 Puchheim (DE); Righetti, Claudio Ivano, 10139 Torino (IT); Schönauer, Miriam, 85405 Nandlstadt (DE); Ueki, Sigeru, 739-2115 Higashihiroshima-City (JP); Vecchioni, Bernhard, Oxford, Michigan 48371 (US)
(74) Vertreter: Schwan - Schwan - Schorer

(56) Entgegenhaltungen:
- EP-A- 0 989 008
- EP-A- 0 989 009
- EP-A- 1 006 013
- DE-A- 4 129 852
- DE-A- 10 021 464
- DE-A- 19 738 281
- DE-C- 10 025 051
- DE-C- 19 804 990
- FR-A- 2 744 957
- US-A- 2 086 091
- US-A- 6 033 012

## Beschreibung

Die vorliegende Erfindung betrifft ein öffnungsfähiges Fahrzeugdach mit einem Verbund aus mehreren in Fahrzeuglängsrichtung hintereinander angeordneten, Lamellen, die in einer Schließstellung flächig aneinander liegen, um eine Dachöffnung zu verschließen, und die paketartig parallel übereinander schiebbar sind, um die Dachöffnung mindestens zum Teil freizulegen.

Ein solches, üblicherweise als Lamellendach bezeichnetes Fahrzeugdach ist aus EP-A-0 989 009 bekannt. Bei geschlossenem Dach reicht dabei der Lamellenverbund heckseitig bis zu der Vorderkante eines zwischen dem Lamellenverbund und der Oberkante einer Heckscheibe angeordneten, verschiebbar gelagerten Staukastens. Zum Öffnen des Daches wird der Lamellenverbund nach hinten geschoben, wobei die Lamellen in dem Staukasten gestapelt werden, den die Heckscheibe an einem Verstellen nach hinten hindert. Die Heckscheibe bildet den oberen Teil einer Hecktüre, deren unterer Teil eine mit einem Stauraum versehene Heckklappe ist. Für ein weitergehendes Freilegen des Fahrzeuginnenraums lässt sich die Heckscheibe um eine Querachse im Bereich ihrer Unterkante in eine Position schwenken, in welcher der Staukasten samt den darin untergebrachten Lamellen für eine Verschiebebewegung freigegeben wird. Sowohl der Staukasten wie die Heckscheibe können dann in den Stauraum der Heckklappe abgesenkt werden. Anschließend kann die Heckklappe geöffnet werden. Je nach Ausführungsform kann dies unter anderem dadurch geschehen, dass die Heckklappe um eine im Bereich ihrer Unterkante verlaufende, unterhalb der Gürtellinie des Fahrzeugs liegende Querachse nach hinten oder nach vorne umgelegt wird. Die bekannte Anordnung ist hinsichtlich Aufbau und Montage aufwendig. En heckseitiges Freilegen des Fahrzeuginnenraums ist umständlich und nur bei nach oben offenem Fahrzeuginnenraum möglich.

Aus der EP 1 006 013 A1 ist ein Fahrzeug bekannt, bei welchem sich die Dachöffnung von der Windschutzscheibe bis zur Ladekante des Heckstauraums erstreckt, wobei ein Lamellenverbund vorgesehen ist, um in einer Schließsteilung die gesamte Dachöffnung zu verschließen. Dabei liegen die Lamellen dann flächig hintereinander, wobei eine Heckscheibe in den Lamellenverbund integriert ist. Benachbarte Lamellen sind mittels einer Schamieranordnung miteinander verbunden, wobei die Lamellen, wenn die Dachöffnung teilweise oder ganz freigegeben werden soll, aufeinander bzw. aneinander gefaltet werden können. Die Lamellen sind seitlich jeweils in einer karosseriefesten Führung geführt. Um die Dachöffnung vollständig freizulegen, können die Lamellen in gefaltetem Zustand in einer Ablage hinter den Rücksitzen abgelegt werden.

Aus der US 2,086,091 ist ein Gütertransportfahrzeug bekannt, dessen Ladebereich nach oben und nach hinten von einem Deckelverbund abgedeckt werden kann, der aus mehreren hintereinander liegenden, scharnierartig miteinander verbundenen Deckeln besteht. Die von dem Deckelverbund zu verschließende Öffnung erstreckt sich dabei von dem vorderen Rand des Ladebereichs bis zu der hinteren Ladekante. Um den Ladebereich freizulegen, können die Deckel am vorderen Ende des Ladebereichs aufeinander gefaltet abgelegt werden.

Aus der DE 197 38 281 AI ist ein als Pickup-Fahrzeug ausgebildeter Personenkraftwagen bekannt, bei welchem sich eine Dachöffnung von der Windschutzscheibe bis zu der Ladekante des Heckstauraums erstreck und von einem Stoffdach verschlossen werden kann, welches im Bereich der Windschutzscheibe auf eine Aufwickelrolle aufwickelbar bzw. von dieser abwickelbar ist.

Es ist Aufgabe der vorliegenden Erfindung, ein öffnungsfähiges Fahrzeugdach mit einem Lamellenverbund zu schaffen, welches ein einfaches und bequemes Beladen eines Heckstauraums ermöglich und dennoch eine einfache und mechanisch zuverlässige Führung des Lamellenverbunds gestattet.

Diese Aufgabe wird erfingdungsgemäß gelöst durch ein Fahrzeugdach gemäß Anspruch 1. Bei der erfindungsgemäßen Lösung erstreckt sich die Dachöffnung bis unter die Gürtellinie des Fahrzeugs, und ein bequemes Beladen des Heckstauraums wird ohne störende Heckklappe ermöglicht. Weil die Lamellen in der Öffnungsstellung paketartig übereinander schiebbar sind, wird eine einfache Führung der Lamellen ohne das Erfordernis einer Faltbarkeit der Lamellen möglich. Insbesondere können auch ein ansprechendes optisches Erscheinungsbild sowie eine stabile Abdeckung im geschlossenen Zustand erzielt werden.

Bevorzugte Ausgestaltungen der Erfindung ergeben sich aus den Unteranspruchen. Im Folgenden wird die Erfindung anhand der beigefügten Zeichnungen beispielhaft näher erläutert. Dabei zeigen:
Fig. 1 eine schematische perspektivische Ansicht eines erfindungsgemäßen Fahrzeugdaches in der Schließstellung; und
Fig. 2 eine Ansicht wie Fig. 1, wobei jedoch das Fahrzeugdach mit geöffnetem Heckbereich dargestellt ist.

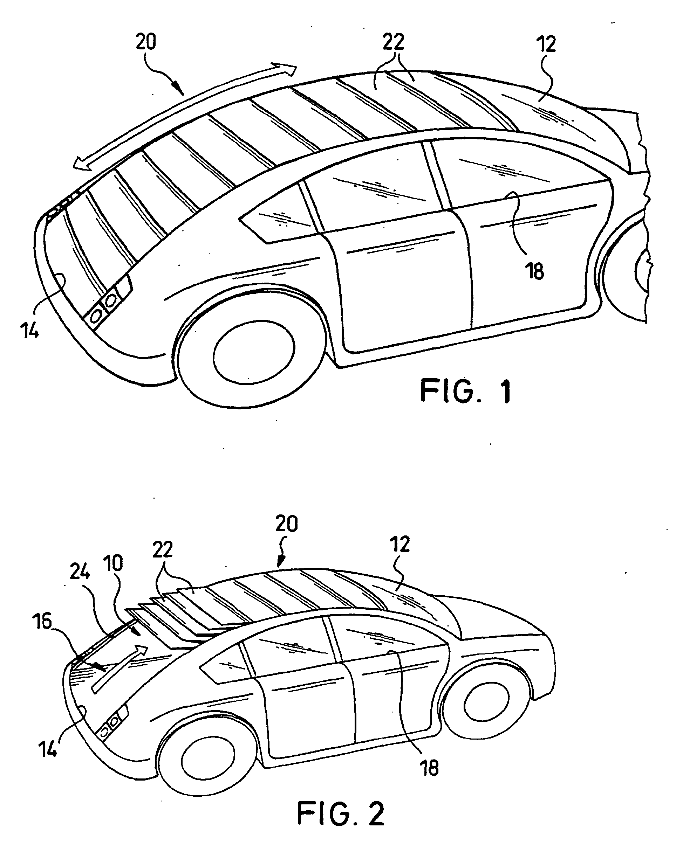

Gemäß Fig. 1 ist ein Fahrzeug dargestellt, welches eine Dachöffnung 10 aufweist, welche sich von der Windschutzscheibe 12 bis zu der Ladekante 14 eines Heckstauraums 16 erstreckt. Die Ladekante 14 liegt dabei unterhalb der Gürtellinie 18 des Fahrzeugs. Ein Lamellenverbund 20 ist vorgesehen, um die Dachöffnung 10 wahlweise in einer in Fig. 1 gezeigten Schließstellung zu verschließen oder mindestens teilweise freizulegen, siehe Fig. 2.

Der Lamellenverbund 20 besteht aus einer Mehrzahl von Lamellen 22, welche seitlich jeweils in einer karosseriefesten Führung 24 geführt sind, die sich jeweils an den beiden Seitenrändern der Dachöffnung 10 erstreckt. Die Lamellen 22 sind wie bei einem herkömmlichen Lamellendach so ausgebildet, dass sie in der Schließstellung flächig hintereinander liegen, um die Dachöffnung 10 zu verschließen, wobei die Lamellen 22 so miteinander gekoppelt sind, dass sie mit ihrer Hinterkante nach oben ausstellbar sind und in der ausgestellten Position parallel übereinander geschoben werden können, um ein Lamellenpaket zu bilden. Dabei kann das Öffnen des Lamellenverbunds 20 dadurch erfolgen, dass entweder die vorderste oder die hinterste Lamelle mittels eines Antriebs nach vorn bzw. nach hinten geschoben wird, wodurch die anderen Lamellen zu einer entsprechenden Verschiebung mitgenommen werden, wobei selbsttätig eine Ausstellbewegung der Lamellen, beginnend mit der hintersten Lamelle, erfolgt.

Bei vollständig geöffneter Dachöffnung 10 bilden die Lamellen 22 dann ein Lamellenpaket, das, je nach Öffnungsrichtung, am vorderen oder hinteren Ende der Dachöffnung 10 liegt und aus parallel aneinanderliegenden, ausgestellten Lamellen 22 besteht. Die Koppelmechanik für die Lamellen 22 zur Erzielung dieser Funktion kann in an sich bekannter Weise ausgebildet sein.

Das Öffnen des Lamellenverbunds 20 kann durch Betätigen eines Antriebs ausgehend von der in Fig. 1 gezeigten Schließstellung durch Verschiebung der hintersten Lamelle in Vorwärtsrichtung erfolgen, wodurch zunächst, beginnend von der Ladekante 14, der Heckstauraum zum Beladen bzw. Entladen freigelegt wird. Wird die hinterste Lamelle über die in Fig. 2 gezeigte Stellung hinaus noch weiter nach vorn geschoben, kann auf diese Weise auch der über den Fahrzeuginsassen liegende Teil der Dachöffnung 10 zu Lüftungszwecken freigelegt werden, wobei bei vollständig freigelegter Dachöffnung die Lamellen 22 als Paket am vorderen Rand der Dachöffnung 20 angelangen.

Wenn dagegen nicht der Heckbereich, sondern nur der Bereich der Dachöffnung 10 oberhalb der Fahrzeuginsassen freigelegt werden soll, kann dies dadurch erfolgen, dass über einen Antrieb die vorderste Lamelle nach hinten geschoben wird, um die Lamellen im Bereich des Heckstauraums übereinander zu schieben.

Bei einer dritten Öffnungsvariante kann ausgehend von der in Fig. 2 gezeigten Stellung mit freigelegtem Heckstauraum 16 die vorderste Lamelle mittels des Antriebs nach hinten verschoben werden, so dass die Lamellen im Bereich zwischen dem Heckstauraum 16 und dem Bereich oberhalb der Fahrzeuginsassen zu einem Lamellenpaket zusammengeschoben werden. Vorzugsweise erfolgt die Betätigung der vordersten bzw. hintersten Lamelle über zwei getrennte Antriebe.

### Bezugszeichenliste

- **10**: Dachöffnung
- **12**: Windschutzscheibe
- **14**: Heckladekante
- **16**: Heckstauraum
- **18**: Gürtellinie
- **20**: Lamellenverbund
- **22**: Lamellen
- **24**: Führung für 22

## Patentansprüche

1. Öffnungsfähiges Fahrzeugdach mit einem Verbund (20) aus mehreren in Fahrzeuglängsrichtung hintereinander angeordneten, ausstellbaren Lamellen (22), die in einer Schließstellung flächig aneinander liegen, um eine Dachöffnung (10) zu verschließen, und die im ausgestellten Zustand paketartig parallel übereinander schiebbar sind, um die Dachöffnung mindestens zum Teil freizulegen, wobei die Dachöffnung (10) sich im Heckbereich des Fahrzeugs bis unterhalb der Gürtellinie (18) des Fahrzeugs und bis zur Ladekante (14) eines Heckstauraums (16) des Fahrzeugs erstreckt und wobei der Lamellenverbund (20) zum Beladen des Heckstauraums (16) mittels eines Antriebs ausgehend von der Ladekante (14) nach oben vom in eine Beladeposition zusammenschiebbar ist, in welcher jedoch der Fahrzeuginnenraum noch von dem Lamellenverbund nach oben verschlossen ist.

2. Fahrzeugdach nach Anspruch 1, **dadurch gekennzeichnet, dass** der Lamellenverbund (20) mittels eines Antriebs ausgehend von dem vorderen Dachöffnungsrand nach hinten zusammenschiebbar ist, um die Dachöffnung (10) im Bereich der Passagiere mindestens zum Teil freizulegen.

3. Fahrzeugdach nach einem der vorhergehenden Ansprüche, **dadurch gekennzeichnet, dass** der Lamellenverbund (20) ausgehend von dem vorderen Dachöffnungsrand und dem hinteren Dachöffnungsrand (14) in einem mittleren Abschnitt der Dachöffnung (10) zusammenschiebbar ist, um die Dachöffnung sowohl im Bereich der Passagiere als auch im Bereich des Heckstauraums (16) freizulegen.

4. Fahrzeugdach ' nach einem der vorhergehenden Ansprüche, **dadurch gekennzeichnet, dass** zwei getrennte Antriebe zum Öffnen des Lamellenverbunds (20) von vom beziehungsweise von hinten vorgesehen sind.

## Claims

1. Openable vehicle roof comprising a compound (20) of a plurality of plates (22) which are disposed in series in the longitudinal direction of the vehicle and are adapted to be tilted out, said plates, when in a closed position, contacting each other in a two-dimensional pattern for closing a roof opening (10), and said plates, when in a tilted-out position, being adapted to be moved into a packet-type parallel super-imposed relationship for at least partially exposing the roof opening, wherein the roof opening (10) extends in the rear part of the vehicle to beneath the waistline (18) of the vehicle and to the loading edge (14) of a rear boot (16), and wherein the compound (20) of plates is adapted to be pushed together by drive means, starting from the loading edge (14), in a forward, upward direction into a loading position in which, however, the interior of the vehicle still is closed at its upper side by the compound of plates.

2. Openable vehicle roof as claimed in claim 1 **characterized in that** the compound (20) of plates is adapted to be pushed together by drive means, starting from the front edge of the roof opening, in a rearward direction to at least partially expose the roof opening (10) in the passenger area.

3. Openable vehicle roof as claimed in any one of the preceding claims **characterized in that** the compound (20) of plates is adapted to be pushed together, starting from the front edge of the roof opening or from the rear edge of the roof opening, in a central section of the roof opening to expose the roof opening (10) in the passenger area as well as in the area of the rear boot (16).

4. Openable vehicle roof as claimed in any one of the preceding claims **characterized by** comprising two separate drive means for opening the compound (20) of plates from the front and from the rear, respectively.

## Revendications

1. Toit ouvrant de véhicule, avec un ensemble (20) constitué de plusieurs lamelles relevables (22), disposées les unes à la suite des autres dans la direction longitudinale du véhicule, qui sont appliquées à plat les unes contre les autres dans une position fermée, afin de fermer une ouverture de toit (10), et qui dans l'état relevé peuvent être regroupées en parallèle les unes au-dessus des autres par coulissement, afin de dégager au moins partiellement l'ouverture de toit, sachant que l'ouverture de toit (10) s'étend dans la région arrière jusqu'en dessous de la ceinture de caisse (18) du véhicule et jusqu'au bord de chargement (14) d'un espace de rangement arrière (16) du véhicule, et sachant que l'ensemble de lamelles (20) peut, afin de charger l'espace de rangement arrière (16), au moyen d'un entraînement, être regroupé par coulissement vers le haut et vers l'avant en partant du bord de chargement (14) dans une position de chargement dans laquelle l'habitacle du véhicule est cependant encore fermé vers le haut par l'ensemble de lamelles.

2. Toit de véhicule selon la revendication 1, **caractérisé en ce que** l'ensemble de lamelles (20) peut, au moyen d'un entraînement, être regroupé par coulissement vers l'arrière en partant du bord avant de l'ouverture de toit, afin de dégager au moins partiellement l'ouverture de toit (10) dans la région des passagers.

3. Toit de véhicule selon l'une des revendications précédentes, **caractérisé en ce que** l'ensemble de lamelles (20) peut, en partant du bord avant de l'ouverture de toit et du bord arrière (14) de l'ouverture de toit, être regroupé par coulissement dans une partie médiane de l'ouverture de toit (10), afin de dégager l'ouverture de toit à la fois dans la région des passagers et dans la région de l'espace de rangement arrière (16).

4. Toit de véhicule selon l'une des revendications précédentes, **caractérisé en ce qu'**il est prévu deux entraînements séparés, pour l'ouverture de l'ensemble de lamelles (20) respectivement en partant de l'avant et en partant de l'arrière.
